# EUROPEAN PATENT SPECIFICATION

(11) **EP 1 899 144 B1**
(45) Date of publication and mention of the grant of the patent: **17.11.2010**
(21) Application number: 06742540.5
(22) Date of filing: 05.04.2006
(51) Int. Cl.: B29C 65/56, F16B 37/06

(54) **METHOD FOR JOINING A FIRST COMPONENT FORMED OF A PLASTIC MATERIAL TO A SECOND COMPONENT, AND JOINING ELEMENT AND ARRANGEMENT**
VERFAHREN ZUR VERBINDUNG EINES AUS KUNSTSTOFFMATERIAL HERGESTELLTEN ERSTEN BAUTEILS MIT EINEM ZWEITEN BAUTEIL UND VERBINDUNGSELEMENT UND KOMBINATION
PROCÉDÉ DE JONCTION D'UN PREMIER COMPOSANT CONSTITUÉ DE MATÉRIAU PLASTIQUE À UN SECOND COMPOSANT, ET ÉLÉMENT ET COMBINAISON DE JONCTION

(30) Priority: 01.06.2005 DE 102005025096; 28.06.2005 US 694753 P
(43) Date of publication of application: 19.03.2008
(73) Proprietor: Airbus Operations GmbH, 21129 Hamburg (DE)
(72) Inventor: VAS, Peter, 28211 Bremen (DE); VISSERS, Stephan, 28201 Bremen (DE)
(74) Representative: Kopf, Korbinian Paul
(86) International application number: PCT/EP2006/003093
(87) International publication number: WO 2006/128514

(56) References cited:
- US-A- 5 879 115
- PATENT ABSTRACTS OF JAPAN vol. 009, no. 294 (M-431), 20 November 1985 (1985-11-20) -& JP 60 132739 A (SAN KAGAKU KOGYO KK), 15 July 1985 (1985-07-15)

## Description

### Field of the invention

This invention relates to a method according to claim 1 for joining a first component formed of a plastic material, in particular of a thermoplastic and/or thermosetting plastic material, to a second component by applying a joining element on the first component, wherein the joining element has a supporting plate formed of a thermoplastic and/or thermosetting plastic material and comprising a connecting means and a supporting plate bore.

In addition, the invention relates to a joining element according to claim 6 for creating a junction in accordance with the method, with a supporting plate that can be fastened to a first component and comprises a supporting plate bore, and a connecting means that can be received in the supporting plate and is realized for incorporating a joining means arranged on a second component in order to establish a junction with the second component, wherein the first component is formed of a plastic material, in particular of a thermoplastic and/or thermosetting plastic material.

Furthermore, the invention relates to an arrangement according to claim 13, in particular for performing the method for creating a junction between a first component formed of a plastic material, in particular a thermoplastic and/or thermosetting plastic material, and a second component by means of a joining element.

### Technological Background

Joining plate-shaped components, which only have low material thickness with respect to superficial extent, to other components or components also realized in plate-shape proves to be costly, because on many occasions, due to the low material thickness, joining screws, rivets, or the like, cannot be inserted directly into the components.

The closest prior art is recited in US-A-354 7741.

To provide such junctions, e.g. so called plate nuts are implemented in the aircraft or automotive industry. Known embodiments of plate nuts have a base plate with a substantially rectangular basis, which tapers at both end regions. The base plate has a center bore, arranged approximately in the middle. In both end regions of the base plate, respectively one fastening bore is incorporated. The longitudinal edges of the base plate are flanged in the region of the center bore for receiving a fastening nut. Herein, the fastening nut is received in the base plate so that an equalization of tolerances is possible in two spatial directions, in parallel to the base plate.

Alternatively, it is also possible to provide a fastening spring for connecting the fastening nut to the base plate. The fastening spring is then e.g. held by retaining cams with recesses, arranged on both sides in parallel to the longitudinal sides of the base plate. For replacing the fastening nut, the fastening spring can be taken out of the recesses. In this variant as well, an equalization of tolerances is possible due to the fastening nut received by means of the fastening spring to be movable in two spatial directions in parallel to the base plate.

For producing a junction between a first and second component, the plate nut is initially fastened on the first component. For this purpose, initially two holes are incorporated into the first component, substantially coincidently with the fastening bores in the base plate. Afterwards, the base plate with the first component is joined to the second component by two rivets inserted into the fastening bore. Afterwards, in the region of the center bore of the plate nut another bore is incorporated into the first component, which bore is e.g. for passing a stud. This bore can be incorporated before fastening the plate nut on the first component. Finally, e.g. a stud or the like is guided through a bore in the second component, the stud being screwed down with the fastening nut for the effective junction of the first component with the second component.

Other methods or joining means for producing such junctions can get by with one center bore in the first component. Fastening of the plate nut is herein performed by expanding a sleeve surrounding the center bore of the plate nut inside the bore of the first component, similarly to fastening a so called "pop rivet". Expanding the sleeve can then be performed e.g. by a disposable drift pin, which is drawn through the sleeve by means of a tool. During the production process of the joining element, this drift pin can be inserted into the sleeve. Alternatively, expanding can also be performed by a separate pin, which is inserted into the sleeve only when the joining element is mounted, and which is removed at the end of the expanding operation and can be reused. As a result of the central fastening of the plate nut in the first component, it is not necessary in either variant to join the plate nut to the first component by two separate rivets.

Due to a plurality of steps, the above mentioned methods or joining means require relatively intensive installation work. Furthermore, in particular in components with fiber reinforced plastic materials, there is the risk of delaminations in the region of the junctions. Such delaminations can occur e.g. in regions wherein a mechanical load of the material is produced in parallel to the preferred fiber orientation, as is the case in particular in rivet joints, screw joints, or when expanding sleeves in bores in fiber reinforced plastic materials. Both the rivets for fastening the plate nut and the expansible sleeve for central fastening of the plate nut moreover imply the risk of corrosion processes because components made of different materials are adjacent.

### Summary of the invention

Amongst other things, it may be an object of the invention to provide a method, a joining element, and a device for simple and fast production of junctions between in particular plate-shaped components, wherein at least one component may be formed in particular of a thermoplastic plastic material. Moreover, it may be an object of the invention to reduce delaminations as well as corrosion processes in the region of the junctions produced.

The object of the invention may initially be achieved by a method in accordance with patent claim 1.

By producing a weld joint between the first component, formed in particular of a thermoplastic and/or thermosetting plastic material, and a supporting plate of the joining element, both components can be joined to each other rapidly and easily, wherein only the incorporation of a bore into the first component is required. Herein, it is assumed that the first component is formed of a thermoplastic and/or thermosetting plastic material, which can also have fiber reinforcement, wherein a thermosetting plastic material must be provided with an interface layer, preferably formed of a thermoplastic plastic material, at least in the region of the weld joint to be produced, so as to enable the weldability with the supporting plate of the joining element.

The weld joint between the first component and the retaining plate of the joining element allows for a connection with high mechanical load capacity of the joining element to the first component without significant weakening of the material or the risk of delaminations to occur. Moreover, the risk of corrosion processes to occur is decreased because at least in the region of the weld joint, only materials of the same kind are adjacent.

Moreover, the object of the present invention may be achieved by a joining means in accordance with claim 6.

In that the supporting plate is realized so as to be weldable to the first component, a simple and fast production of a junction between a first component, formed of a thermoplastic and/or thermosetting plastic material, to a second component may be ensured. Moreover, as a result of the supporting plate being weldable to the first component, the risk of the formation of delaminations and corrosion processes may decrease due to a reduction of the number of bores required for fastening. Also, the supporting plate of the joining element can be joined solidly to the first component without the risk of material weakening as a result of the incorporation of bores or rivets for fastening. Eventually, because of the welding operation, the joining element becomes an integral part of the first component.

In addition, the objective of the present invention may be achieved by an arrangement in accordance with claim 13.

In that the junction for producing a weld joint is realized between the first component and the joining element, it is possible to produce junctions between two components, in particular plate-shaped ones, simply and rapidly with the advantages already mentioned above.

Other configurations of the method, the joining element, and the device are exposed in the other patent claims.

### Short description of the drawings:

In the drawing:
- Fig. 1: shows a top view of the inventive joining element;
- Fig. 2: shows a perspective view of a supporting plate of the joining element; and
- Fig. 3: shows a schematic cross-sectional illustration of the device for creating a junction with the joining element.
In the drawings, identical structural elements respectively are provided with the same reference symbols.

### Detailed description of exemplary embodiments

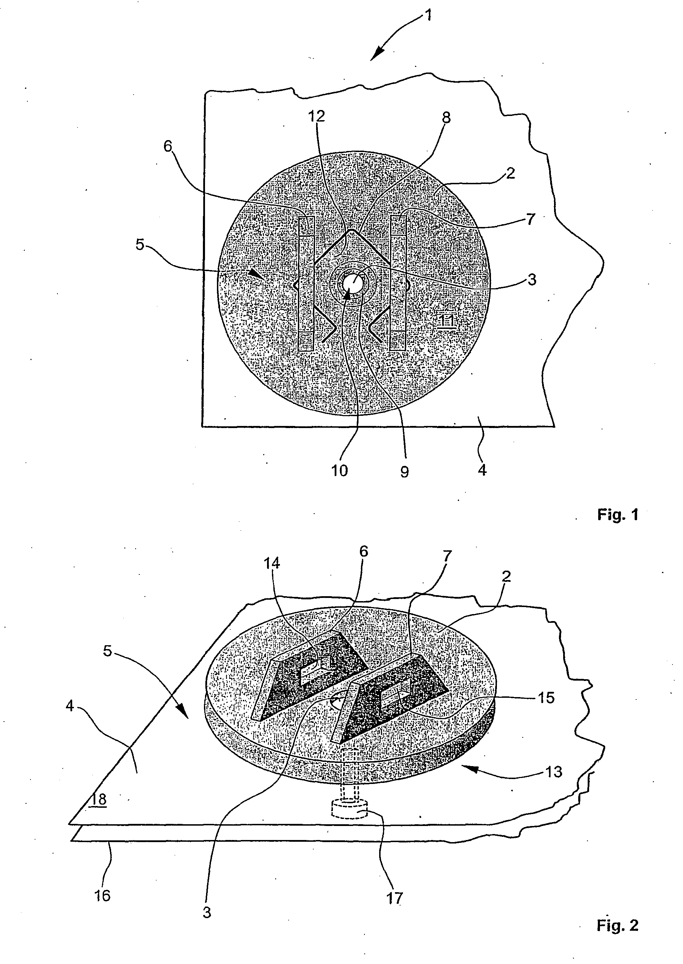

Fig. 1 shows a top view of the inventive joining element.

The joining element 1 comprises among other things a supporting plate 2, preferably realized to be circular, into which a supporting plate bore 3 is incorporated approximately in the middle. The supporting plate 2 can also have a geometric shape which differs from the circular shape: The supporting plate 2 is joined to the first component 4 by a weld joint.

In order to enable a weld joint between the first component 4 and the supporting plate 2 of the joining element 1, the supporting plate 2 is formed according to the invention of a thermoplastic plastic material, which additionally can have fiber reinforcement. The supporting plate 2 can e.g. be formed of a plastic material, such as polyetheretherketone (PEEK), polyetherimide (PEI), or the like.

Alternatively, it is also possible to form the supporting plate 2 of a thermosetting material, wherein a bottom side of the supporting plate 2, which cannot be illustrated in Fig. 1, in this case has to have an interface layer formed of a thermoplastic plastic material in order to enable the weldability with the first component 4.

The interface layer can be made e.g. by spreading, gluing, rolling, baking, pressing, burning a thermoplastic plastic material with the underlying thermosetting base material. If the thermosetting base material has fiber reinforcement, then the fiber reinforcement can be realized so that a plurality of fibers protrude from the surface of the base material and thus allow for intimate interleaving with the interface layer applied. Preferably, for forming the interface layer, the same plastic materials are implemented as are also used in the production of the supporting plate of the joining means 1, i.e. for instance polyetheretherketone (PEEK), polyetherimide (PEI), or the like.

The first component 4 can be formed of a thermoplastic and/or thermosetting plastic material, which can additionally have fiber reinforcement. The second component can be formed of a metallic material, a thermoplastic and/or thermosetting plastic material or the like. If required, also the second component can have fiber reinforcement.

If the first component 4 is formed of a thermosetting plastic material, then in order to enable the weldability with the supporting plate 2, the first component 4 must be provided at least in a joining region 5 between the first component 4 and the supporting plate 2 with an interface layer of thermoplastic plastic material, not represented in Fig. 1. The spatial extent of the joining region 5 herein corresponds preferably at least to the circular area of the supporting plate 2. Depending on the mechanical strength properties to be obtained for the weld joint, the interface layer can also be applied only locally in the joining region 5.

In addition, on both sides of the supporting plate bore 3, retaining cams 6, 7 are arranged. In the retaining cams 6, 7 recesses not represented in Fig. 1 are incorporated. The recesses are for detachably receiving a spring element 8 having a substantially square peripheral outline for forming a detachable fastening means for a screw nut 9 to be received in the joining element 1. The screw nut 9 has a bore 10 with an internal thread. Into the internal thread, a stud not represented in Fig. 1 can be screwed for joining to a second component, also not represented in Fig. 1. Before the components are effectively tightened together, the screw nut 9 is slightly movable in two spatial directions in parallel to a top side 11 of the supporting plate 2 so that some equalization of tolerances is possible between the first component 4 and the second component by means of the inventive joining element 1.

Both the screw nut 9 and the stud can be formed of a metallic material and/or a plastic material and can additionally have fiber reinforcement for increasing mechanical load capacity.

In the sample embodiment shown here, the stud functions as a joining means which can be incorporated into the screw nut 9 forming the connecting means for creating the mechanical junction as such between the first component 4 and the second component.

Instead of the connecting means in the form of a screw nut 9, as well as a joining means in the shape of a stud, other connecting means and joining means can be provided. E.g. the junction of the second component with the joining element 1 can also be formed by a detachable clamping joint or the like, wherein a latch arranged at the second component can be latched preferably so as to be detachable again with a latching member formed correspondingly and arranged between the retaining cams 6, 7.

The spring element 8 is received in the recesses so as to be removable therefrom. E.g. if the screw nut 9 is damaged during the mounting process, it can easily be exchanged and replaced with a new one by taking out the spring element 8. Afterwards, the spring element 8 is again inserted into the recesses, so that it engages the recesses. Thereby, for exchanging the screw nut 9, it is no longer required to detach the supporting plate 2, welded to the first component 4, of the joining element 1 from the first component 4.

For locking by means of the spring element 8, the screw nut 9 has a substantially rectangular base plate 12. The base plate 12 has at both ends approximately circular recesses. The base plate 12 rests on the top side 11 of the supporting plate 2 under the spring element 8. Thus, the screw nut 9 is solidly tightened by the spring element 8, so that the latter cannot lift off vertically from the top side 11 of the supporting plate 2. The spring element 8 nevertheless allows for the screw nut 9 to be movable in parallel to the top side 11 of the supporting plate 2 between the retaining cams 6, 7 for minor equalization of tolerances.

The supporting plate 2 as well as the retaining cams 6, 7 are realized preferably integrally and produced by injection molding with one of the thermoplastic plastic materials already mentioned before, so that a cost-effective mass manufacturing of the joining element 1 is possible. The supporting plate bore 3 can likewise be formed in the course of the injection molding process or be subsequently incorporated into the supporting plate 2. Alternatively, it is possible for the screw nut 9 to be realized directly during the injection molding process, in particular if it is formed of a thermoplastic plastic material. However, in this case, no equalization of tolerances and no exchange of the screw nut 9 in case of possible damage of the same is possible anymore without detaching the complete supporting plate 2 from the first component 4.

Fig. 2 represents a perspective view of the supporting plate 2. For better clarity of the drawing, the spring element 8 as well as the screw nut 9 are not represented.

The supporting plate 2 comprises the retaining cams 6, 7. Preferably approximately in the middle, the supporting plate bore 3 is incorporated into the supporting plate 2. As already explained before, a bottom side 13 of the supporting plate 5 is mechanically joined solidly to the first component 4, according to the invention by a weld joint. In the sample embodiment shown of the supporting plate 2, the recesses 14, 15 have a substantially rectangular shape. Unlike the rectangular shape, represented in Fig. 2, of the recesses 14, 15, they can have a shape different therefrom, e.g. trapezoid or oval. The recesses 14, 15 are meant to receive and lock the spring element 8 in a resilient or latching way for fastening the screw nut 9 on the supporting plate 2. The second component 16 is joined to the first component 4 by means of the stud 17. For this purpose, the stud 17 is screwed into the screw nut 9, so that the components 4, 16 are solidly tightened together. Instead of the stud 17 and the screw nut 9, it is also possible to implement other joining systems, e.g. latching or clamping joints.

Subsequently, the inventive method for joining the first component 4 to the second component 16 through the inventive joining means 1 shall be explained in further detail.

Initially, a bore, preferably having a diameter approximately corresponding to an external diameter of the stud 17 or a diameter of the supporting plate bore 3, is incorporated into the first component 4. This bore in the first component 4 is substantially meant for guiding and centering the tool or the device for producing the weld joint.

Thereafter, according to the invention, the weld joint between the bottom side 13 of the supporting plate 2 of the joining element 1 and the first component 4 is produced. This weld joint can be produced by means of known plastic welding processes. E.g. the joining element 1 can be joined to the first component 4 by ultrasonic welding, high frequency welding, electric resistance welding, electric induction welding, vibration welding, or the like. Basically, any process is appropriate that effects sufficient thermal energy input in the joining region 5 so as to enable the material in the region of a top side 18 of the first component 4 and in the region of the bottom side 13 of the supporting plate 2 to be at least superficially melted open for a proper welding operation.

Herein, as already explained in the description of the joining element 1, it is assumed that the first component 4 is formed at least in the joining region 5 and the bottom side 13 of the supporting plate 2 of the joining element 1 is formed at least locally of a thermoplastic plastic material, in particular a material of polyetheretherketone (PEEK) and/or a material of polyetherimide (PEI), in order to enable intimate and also mechanical load bearing thermal welding. Both the first component 4 and the supporting plate 2 can herein also have fiber reinforcement.

If the first component 4 is formed of a thermosetting plastic material, e.g. a carbon fiber reinforced epoxy resin (CFK) or the like, then it is necessary before the application of the joining element 1 to provide at least in the joining region 5 at least locally an interface layer, i.e. to apply it on the top side 18 in the joining region 5. The interface layer is formed of a thermoplastic plastic material, in particular of a material of polyetheretherketone (PEEK) and/or a material of polyetherimide (PEI), and enables intimate and thus high mechanical load bearing thermal welding of a component 4 formed of a thermosetting plastic material with the supporting plate 2 of the joining element 1, the plate being also formed of one of the above-mentioned thermoplastic materials at least in the region of the bottom side 13.

In another step, for fastening the stud 17 in the second component 16, another bore is incorporated into the second component 16. For completing the junction, the second component 16 is then screwed together with the screw nut 9 in a known manner by means of the stud 17.

For further simplification and rationalization of the joining operation, instead of a screw joint, also clamping or latching joints of any kind can be provided. In addition, it is not essential for a bore to be incorporated into the first component 4 right at the start of the inventive process sequence. In accordance with an alternative procedure, this bore can also be formed with an appropriate tool during the welding operation, whereby the process sequence is simplified. Likewise, if required, it is not necessary for the supporting plate 2 to be provided with the supporting plate bore 3 during the production process as this as well can be incorporated during the welding operation.

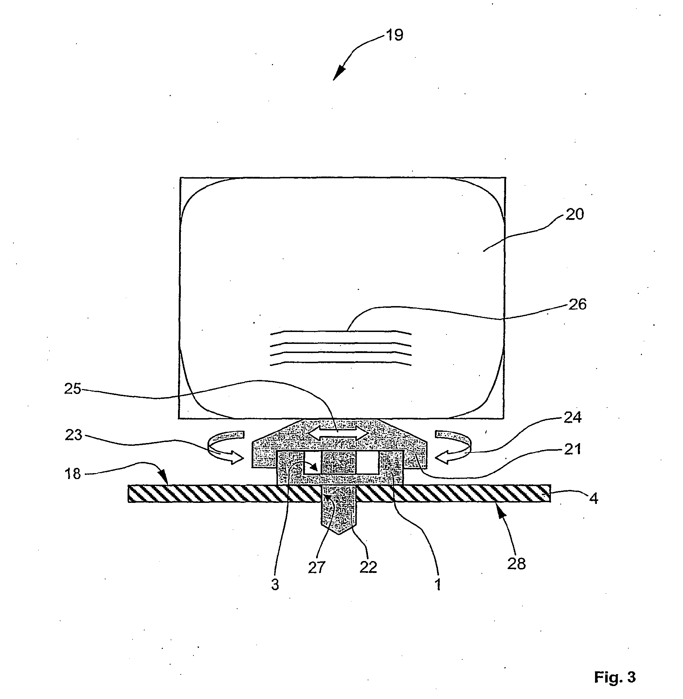

Fig. 3 shows a schematic cross-sectional illustration of a exemplary embodiment of a device for creating a junction by means of the joining element in accordance with the inventive method.

Among other things, the device 19 comprises a drive unit 20 as well as a clamping device 21 for non-positive seating of the joining element 1. The clamping device 21 has clamping members not represented in detail, by means of which the joining element 1 is clamped securely. The clamping device 21 is preferably realized for receiving a plurality of different types of joining elements having various dimensions and/or geometric shapes. In addition, in a preferred embodiment, the clamping device 21 has a pilot pin 22 for guiding and centering the joining element 1 with respect to the first component 4.

For performing the inventive welding operation between the joining element 1 and the first component 4, the clamping device 21 is actuated by means of the drive unit 20 in linearly and/or rotationally oscillating movements or vibrations. The spatial orientation of such linearly and/or rotationally oscillating movements or vibrations in space is indicated by the arrows 23 to 25. Herein, the arrows 23, 24 symbolize the rotationally oscillating reciprocations of the clamping device 21 relatively to the top side 18 of the first component 4, whereas the arrow 25 represents the linearly oscillating reciprocations relatively to the top side 18.

For the rotational movements, the term "oscillating" means that the clamping device 21 does not perform complete rotations in the direction of the arrows 23, 24, but is vibratingly moved by the drive unit 20, respectively only by small angular increments around a vertical rotational axis. Accordingly, the clamping device 21 together with the joining element 1 non-positively received therein vibrates substantially in parallel to the arrow 25 towards the first component 4 in small longitudinal increments. The amplitude of such linearly and/or rotationally oscillating movements of the clamping device 21 is a maximum of 1 mm. However, the movements or vibrations of the clamping device 21 are taking place herein at a comparatively high frequency, e.g. in the order of up to 100 kHz.

In addition to the linearly and/or rotationally oscillating movements of the clamping device 21, which are illustrated by the arrows 23 to 25, the drive unit 20 can also move the clamping device 21 vibratingly up and down in the vertical direction, i.e. substantially perpendicularly to the top side 18 of the first component 4, as indicated by the four lines 26. The amplitude of this up and down movements of the clamping device 21 also only reaches relatively small increments, e.g. of a maximum of 0.1 mm. The frequency of the up and down movements can herein be of up to 200 kHz. The vibratory up and down movements, which are taking place substantially perpendicularly to the top side 18 of the first component 4, effect in particular an intensification of the welding operation between the joining element 1 and the first component 4 due to higher energy input.

Herein, the linearly oscillating movements, the rotationally oscillating movements, as well as the vertically vibratory movements of the clamping device 21 can also be generated by the drive unit 20 simultaneously or successively in any possible combination.

The pilot pin 22 is mainly for guiding the device 19 and/or the joining element 1 for incorporation thereof into a bore 27 previously incorporated into the first component 4. The pilot pin 22 then penetrates the supporting plate bore 3 in the joining element 1. If the bore 27 in the first component 4 in the joining element 1 has not been previously incorporated, then the clamping device 21 can comprise a boring fixture; not represented, for incorporating the bore 27 into the first component 4. Correspondingly, it is also possible to incorporate the supporting plate bore 3 into the supporting plate 2 only when mounting the joining element 1. In another alternative embodiment, the pilot pin 22 can at the same time be realized as a boring fixture and thus combine therein the guiding and centering function as well as the boring function. Preferably, a pilot pin 22 realized as a boring fixture may comprise a small centering tip, which at the beginning ensures secure guiding or positioning of the device 19 on the top side 18 of the first component 4.

According to another alternative embodiment, the boring fixture as well as the device 19 for creating a junction between the first component 4 and the joining element 1 can also be functionally separate from each other. In this case, at the beginning of the welding operation, a bore 27 is not required in the first component 4, and the pilot pin 22 can be omitted. The bore 27 is only incorporated into the joining element 1 and the first component 4 after complete termination of the welding operation being performed between the joining element 1 and the first component 4.

In addition, for performing the welding operation, a counter piece, not plotted in the illustration of Fig. 3, can be provided, which largely prevents a deflection of the first component 4. For this purpose, the counter piece is at least locally adjacent to a bottom side 28 of the first component 4.

During the welding operation, the drive unit 20 is controlled by a control and regulation device, not represented. By means of the control and regulation device, in particular the amplitude and/or frequency of the linearly and/or rotationally oscillating movements of the clamping device 21 can be controlled. This applies similarly to the vertically vibratory movements of the clamping device 21, which are indicated by the family of lines 26. The control and regulation device has operating elements as well as signal transmitters, not represented in further detail, by means of which e.g. the welding operation can be triggered and the proper termination thereof can be displayed. In addition, by means of the control and regulation device, the amplitude and/or frequency of the linearly and/or rotationally oscillating movements can be preselected easily by parameterization, depending on the quality of material of the first component 4 and the joining element 1, and monitored during the welding operation in order to ensure at all times optimal execution of the welding operation independently of the present combination of materials. This applies similarly to the amplitude and frequency of the vertical vibratory movements of the clamping device 21.

In addition, it can be provided for a user to specify simple abbreviations or material designations in full text for the materials of the supporting plate 2 and the first component 4, and for the control and regulation device then to automatically selects from a characteristic diagram the above-mentioned parameters of the welding operation, in particular frequency and amplitude of the linearly and/or rotationally oscillating movements and the vibratory movements of the clamping device 21, for optimal execution.

Finally, by means of the control and regulation device, if necessary, it is also possible to set and monitor the pressure by means of which the joining element 1 is pressed by the clamping device 21 onto the top side 18 of the first component 4 during the welding operation.

The device 19, schematically represented in Fig. 3, for performing the welding operation between the joining element 1 and the first component 4 only represents a sample embodiment enabling a welding operation by friction welding. Alternatively, it is also possible to envisage devices by means of which e.g. a junction between the joining element 1 and the first component 4 can be formed by high frequency welding, ultrasonic welding, electric resistance welding, electric induction welding, vibration welding, or the like.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### REFERENCE LIST

- 1: joining element
- 2: supporting plate
- 3: supporting plate bore
- 4: first component
- 5: joining region
- 6: retaining cam
- 7: retaining cam
- 8: spring element
- 9: screw nut
- 10: bore (screw nut)
- 11: top side (supporting plate)
- 12: base plate (screw nut)
- 13: bottom side (supporting plate)
- 14: recess
- 15: recess
- 16: second component
- 17: stud
- 18: top side (first component)
- 19: device
- 20: drive unit
- 21: clamping device
- 22: pilot pin
- 23: arrow
- 24: arrow
- 25: arrow
- 26: lines
- 27: bore (first component)
- 28: bottom side (first component)

## Claims

1. A method for joining a first component (4) formed of a plastic material to a second component (16) by applying a joining element (1) on the first component (4), wherein the joining element (1) as a supporting plate (2) formed of a thermoplastic and/or thermosetting plastic material, and wherein the supporting plate comprises a connecting means and a supporting plate bore (3), and wherein
the connecting means is removably received in the supporting plate (2), the method comprising
the steps of:
incorporating a bore (10) into the first component (4);
welding the supporting plate (2) to the first component (4); and
joining the first component (4) and the second component (16) by incorporating a joining means arranged on the second component (16) into the connecting means.

2. The method according to claim 1, further comprising the step of:
providing the first component formed of a thermosetting plastic material with an interface layer, in particular a layer of thermoplastic plastic material, at least in a joining region, before being welded to the supporting plate.

3. The method according to claim 1 or 2, wherein welding the supporting plate to the first component and incorporating the bore into the first component takes place substantially at the same time.

4. The method according to any of claims 1 to 3, further comprising the step of:
incorporating and fastening the connecting means into the supporting plate only after the supporting plate has been welded to the first component.

5. The method according to any of claims 1 to 4, wherein the supporting plate is welded to the first component by friction welding.

6. A joining element (1) for creating a junction in accordance with the method according to any of claims 1 to 5 between a first component and a second component, the joining element comprising:
a supporting plate (2), which is adapted to be fastened to a first component (4) and which comprises a supporting plate bore (3); and
a connecting means, which in configured to be received in the supporting plate (2);
wherein
the connecting means is configured for incorporating a joining means arranged at the second component (16), so as to establish a junction with the second component (16), wherein
the first component (4) is formed of a plastic material, wherein
the supporting plate (2) is configured to be weldable to the first component (4), and
wherein
the connecting means is removably received in the supporting plate (2).

7. The joining element according to claim 6, wherein the supporting plate and/or the connecting means are formed of a thermoplastic and/or a thermosetting plastic material.

8. The joining element according to claim 6 or 7, wherein the supporting plate and/or the connecting means have a fiber reinforcement.

9. The joining element according to any of claims 6 to 8, wherein the supporting plate and/or the connecting means are formed of polyetheretherketone (PEEK) and/or polyetherimide (PEI).

10. The joining element according to any of claims 6 to 9, wherein the supporting plate has at least two retaining cams, arranged laterally with respect to the supporting plate bore, respectively comprising one recess, wherein the recesses can receive a fastening means, in particular a spring element or the like, for detachably fastening the connecting means.

11. The joining element according to any of claims 6 to 10, wherein the connecting means is a screw nut.

12. The joining element according to any of claims 6 to 11, wherein the joining means is a stud, which is configured to be screwed into the screw nut, for producing the solid junction between the first and second component.

13. An arrangement, comprising
a joining element according to at least one of claims 6 to 12; and
a device for creating a junction between a first component formed of a plastic material and a second component by means of the joining element, wherein
the joining element has a supporting plate formed of a thermoplastic and/or thermosetting plastic material, and wherein
the device is configured for producing a weld joint between the first component and the joining element.

14. The arrangement according to claim 13, the device further comprising:
a drive unit comprising a clamping device for receiving the joining element.

15. The arrangement according to claim 13 or 14, wherein the clamping device is configured to be actuated by the drive unit in a linearly and/or rotationally oscillating movement in order to obtain a weld between the supporting plate of the joining element and the first component.

16. The arrangement according to any of claims 13 to 15, wherein the device is configured to press the supporting plate of the joining element on a top side of the first component by means of the clamping device at a defined pressure.

17. The arrangement according to any of claims 13 to 16, wherein by means of a counter piece arranged in the region of a bottom side of the first component, defonnation of the first component due to pressure is largely avoided.

18. The arrangement according to any of claims 13 to 17, wherein the clamping device has a pilot pin for guiding and centering the joining means during the welding operation in the bore in the first component.

19. The arrangement according to any of claims 13 to 18, wherein the pilot pin is additionally realized as a boring fixture for incorporating the bore into the first component during the welding operation.

20. The arrangement according to any of claims 13 to 19, further comprising: a control and regulation device, which is configured to control the frequency and/or amplitude of the linearly and/or rotationally oscillating movement imparted by the drive unit to the clamping device.

21. The arrangement according to any of claims 13 to 20, wherein the control and regulation device has at least one signal transmitter for displaying proper termination of the welding operation.

## Patentansprüche

1. Verfahren zum Verbinden einer ersten Komponente (4), ausgebildet aus einem Kunststoffmaterial, mit einer zweiten Komponente (16) unter Verwendung eines Verbindungselementes (1) an der ersten Komponente (4), wobei das Verbindungselement (1) eine Trägerplatte aufweist, ausgebildet aus einem thermoplastischen und/oder duroplastischen Kunststoffmaterial, und wobei die Trägerplatte Anbindungsmittel und eine Trägerplattenbohrung (3) aufweist und wobei die Verbindungsmittel entfernbar in der Trägerplatte (2) aufnehmbar sind, das Verfahren aufweisend die Schritte:
Einbringen einer Bohrung (10) in die erste Komponente (4);
Verschweißen der Trägerplatte (2) zu der ersten Komponente (4); und
Verbinden der ersten Komponente (4) und der zweiten Komponente (16) durch Einbringen eines Verbindungsmittels, angeordnet an der zweiten Komponente (16) in das Anbindungsmittel.

2. Das Verfahren gemäß Anspruch 1, weiterhin aufweisend den Schritt
Bereitstellen der ersten Komponente, ausgebildet aus einem duroplastischen Kunststoffmaterial mit einer Interfaceschicht, insbesondere einer Schicht aus thermoplastischem Kunststoffmaterial, zumindest in einem Verbindungsbereich, vor dem Verschweißen mit der Trägerplatte.

3. Verfahren gemäß einem der Ansprüche 1 oder 2, wobei das Verschweißen der Trägerplatte und der ersten Komponente und das Einbringen der Bohrung in die erste Komponente im Wesentlichen zeitgleich erfolgen.

4. Verfahren gemäß einem der Ansprüche 1 bis 3, aufweisend den Schritt
Einbringen und Festlegen der Anbindungsmittel in die Trägerplatte erst nachdem die Trägerplatte an die erste Komponente angeschweißt wurde.

5. Verfahren gemäß einem der Ansprüche 1 bis 4, wobei die Trägerplatte an die erste Komponente mittels Reibschweißen angeschweißt wird.

6. Ein Verbindungselement (1) zum Herstellen einer Verbindung gemäß des Verfahrens gemäß einem der Ansprüche 1 bis 5 zwischen einer ersten Komponente und einer zweiten Komponente, das Verbindungselement aufweisend:
eine Trägerplatte (2), welche eingerichtet ist, an einer ersten Komponente anbringbar zu sein und welche eine Trägerplattenbohrung (3) aufweist; und
ein Anbindungsmittel, welches eingerichtet ist, in die Trägerplatte (2) aufnehmbar zu sein; wobei das Anbindungsmittel derart eingerichtet sind, ein Verbindungsmittel aufzunehmen, welches an der zweiten Komponente angeordnet ist, zum Herstellen einer Verbindung mit der zweiten Komponente (16),
wobei die erste Komponente (4) aus einem Kunststoffmaterial ausgebildet ist und wobei die Trägerplatte (2) eingerichtet ist, an die erste Komponente (4) anschweißbar zu sein; und wobei die Anbindungsmittel entfernbar in der Trägerplatte (2) aufnehmbar sind.

7. Das Verbindungselement gemäß Anspruch 6, wobei die Trägerplatte und/oder die Anbindungsmittel aus einem thermoplastischen und/oder einem duroplastischen Kunststoffmaterial ausgebildet sind.

8. Das Verbindungselement gemäß Anspruch 6 oder 7, wobei die Trägerplatte und/oder die Anbindungsmittel eine Faserverstärkung aufweisen.

9. Das Anbindungselement gemäß einem der Ansprüche 6 bis 8, wobei die Trägerplatte und/oder das Anbindungsmittel aus Polyetheretherketon (PEEK) und/oder Polyetherimid (PEI) ausgebildet sind.

10. Das Verbindungselement gemäß einem der Ansprüche 6 bis 9, wobei die Trägerplatte zumindest zwei Haltenocken aufweist, welche jeweils seitlich der Trägerplattenbohrung, aufweisend eine Vertiefung, angeordnet sind, wobei die Vertiefung eingerichtet ist, ein Verbindungsmittel aufzunehmen, insbesondere ein Federelement oder dergleichen, zum entfernbaren Verbinden der Anbindungsmittel.

11. Das Verbindungselement gemäß einem der Ansprüche 6 bis 10, wobei das Anbindungsmittel eine Schraubenmutter ist.

12. Das Verbindungselement gemäß einem der Ansprüche 6 bis 11, wobei das Verbindungsmittel ein Schraubbolzen ist, welcher eingerichtet ist, in die Schraubenmutter eingeschraubt zu werden, zur Herstellung der festen Verbindung zwischen der ersten und der zweiten Komponente.

13. Eine Anordnung, aufweisend
ein Verbindungselement gemäß zumindest einem der Ansprüche 6 bis 12; und
eine Vorrichtung zum Herstellen einer Verbindung zwischen einer ersten Komponente, ausgebildet aus einem Kunststoffmaterial, und einer zweiten Komponente unter Verwendung eines Verbindungselementes,
wobei das Verbindungselement eine Trägerplatte aufweist, ausgebildet aus einem thermoplastischen und/oder duroplastischen Kunststoffmaterial, und
wobei die Vorrichtung eingerichtet ist, eine Schweißverbindung zwischen der ersten Komponente und dem Verbindungselement herzustellen.

14. Die Anordnung gemäß Anspruch 13, die Vorrichtung weiterhin aufweisend eine Antriebseinheit, aufweisend eine Spanneinrichtung zum Aufnehmen des Verbindungselementes.

15. Die Anordnung gemäß Anspruch 13 oder 14, wobei die Spanneinrichtung eingerichtet ist, durch die Antriebseinheit in eine linear und/oder rotatorisch oszillierende Bewegung betätigt zu werden, um eine Verschweißung zwischen der Trägerplatte des Verbindungselementes und der ersten Komponente herzustellen.

16. Die Vorrichtung gemäß einem der Ansprüche 13 bis 15, wobei die Vorrichtung eingerichtet ist, die Trägerplatte des Verbindungselementes auf eine Oberseite der ersten Komponente unter Verwendung der Spanneinrichtung mit einem definierten Druck anzupressen.

17. Die Anordnung gemäß einem der Ansprüche 13 bis 16, wobei unter Verwendung eines Gegenelementes, angeordnet im Bereich auf einer Bodenseite der ersten Komponente, eine Deformation der ersten Komponente aufgrund einer Druckbelastung weitgehend vermieden wird.

18. Die Anordnung gemäß einem der Ansprüche 13 bis 17, wobei die Spanneinrichtung einen Führungspin aufweist zum Führen und Zentrieren der Verbindungsmittel während der Schweißoperation in der Bohrung der ersten Komponente.

19. Die Anordnung gemäß einem der Ansprüche 13 bis 18, wobei der Führungspin zusätzlich als eine Bohrvorrichtung zum Einbringen der Bohrung in die erste Komponente während der Schweißoperation ausgebildet ist.

20. Die Anordnung gemäß einem der Ansprüche 13 bis 19, weiterhin aufweisend eine Steuer-und Regelvorrichtung, welche eingerichtet ist, die Frequenz und/oder die Amplitude der linear und/oder rotatorisch oszillierenden Bewegung zu steuern, welche durch die Antriebseinheit auf die Spanneinrichtung ausgeübt wird.

21. Die Anordnung gemäß einem der Ansprüche 13 bis 20, wobei die Steuerungs- und Regelungsvorrichtung zumindest einen Signaltransmitter aufweist zum Anzeigen einer ordnungsgemäßen Beendigung der Schweißoperation.

## Revendications

1. Procédé pour assembler un premier composant (4) formé d'une matière plastique avec un second composant (16) en appliquant un élément d'assemblage (1) sur le premier composant (4), dans lequel l'élément d'assemblage (1) a une plaque de support (2) formée d'une matière thermoplastique et/ou thermodurcissable, et dans lequel la plaque de support comporte des moyens de liaison et un alésage de plaque de support (3), et
dans lequel les moyens de liaison sont reçus de manière amovible dans la plaque de support (2), le procédé comportant les étapes consistant à :
incorporer un alésage (10) dans le premier composant (4),
souder la plaque de support (2) au premier composant (4), et
assembler le premier composant (4) et le second composant (16) en incorporant des moyens d'assemblage agencés sur le second composant (16), dans les moyens de liaison.

2. Procédé selon la revendication 1, comportant en outre l'étape consistant à :
munir le premier composant formé d'une matière plastique thermodurcissable d'une couche d'interface, en particulier une couche de matière plastique thermoplastique, au moins dans une zone d'assemblage, avant d'être soudé à la plaque de support.

3. Procédé selon la revendication 1 ou 2, dans lequel le soudage de la plaque de support au premier composant et l'incorporation de l'alésage dans le premier composant ont lieu pratiquement en même temps.

4. Procédé selon l'une quelconque des revendications 1 à 3, comportant en outre l'étape consistant à :
incorporer et fixer les moyens de liaison dans la plaque de support uniquement après que la plaque de support ait été soudée au premier composant.

5. Procédé selon l'une quelconque des revendications 1 à 4, dans lequel la plaque de support est soudée au premier composant par un soudage par friction.

6. Elément d'assemblage (1) pour créer une jonction conformément au procédé selon l'une quelconque des revendications 1 à 5 entre un premier composant et un second composant, l'élément d'assemblage comportant :
une plaque de support (2), qui est adaptée pour être fixée à un premier composant (4) et qui comporte un alésage de plaque de support (3), et
des moyens de liaison, qui sont configurés pour être reçus dans la plaque de support (2),
dans lequel les moyens de liaison sont configurés pour incorporer des moyens d'assemblage agencés sur le second composant (16), de manière à établir une jonction avec le second composant (16),
dans lequel le premier composant (4) est formé d'une matière plastique,
dans lequel la plaque de support (2) est configurée pour pouvoir être soudée au premier composant (4), et
dans lequel les moyens de liaison sont reçus de manière amovible dans la plaque de support (2).

7. Elément d'assemblage selon la revendication 6, dans lequel la plaque de support et/ou les moyens de liaison sont formés d'une matière thermoplastique et/ou d'une matière plastique thermodurcissable.

8. Elément d'assemblage selon la revendication 6 ou 7, dans lequel la plaque de support et/ou les moyens de liaison ont un renfort de fibres.

9. Elément d'assemblage selon l'une quelconque des revendications 6 à 8, dans lequel la plaque de support et/ou les moyens de liaison sont formés de polyétheréthercétone (PEEK) et/ou de polyétherimide (PEI).

10. Elément d'assemblage selon l'une quelconque des revendications 6 à 9, dans lequel la plaque de support a au moins deux cames de retenue, agencées latéralement par rapport à l'alésage de plaque de support, comportant respectivement un évidement, dans lequel les évidements peuvent recevoir des moyens de fixation, en particulier un élément à ressort ou analogue, pour fixer les moyens de liaison de manière détachable.

11. Elément d'assemblage selon l'une quelconque des revendications 6 à 10, dans lequel les moyens de liaison sont un écrou de vis.

12. Elément d'assemblage selon l'une quelconque des revendications 6 à 11, dans lequel les moyens d'assemblage sont un goujon, qui est configuré pour être vissé dans l'écrou de vis, pour produire la jonction solide entre le premier et le second composant.

13. Agencement comportant
un élément d'assemblage selon au moins une des revendications 6 à 12, et
un dispositif pour créer une jonction entre un premier composant formé d'une matière plastique et un second composant au moyen de l'élément d'assemblage,
dans lequel l'élément d'assemblage a une plaque de support formée d'une matière thermoplastique et/ou d'une matière plastique thermodurcissable, et
dans lequel le dispositif est configuré pour produire un joint soudé entre le premier composant et l'élément d'assemblage.

14. Agencement selon la revendication 13, le dispositif comportant en outre :
une unité d'entraînement comportant un dispositif de serrage pour recevoir l'élément d'assemblage.

15. Agencement selon la revendication 13 ou 14, dans lequel le dispositif de serrage est configuré pour être actionné par l'unité d'entraînement dans un mouvement oscillant de manière linéaire et/ou rotative afin d'obtenir une soudure entre la plaque de support de l'élément d'assemblage et le premier composant.

16. Agencement selon l'une quelconque des revendications 13 à 15, dans lequel le dispositif est configuré pour presser la plaque de support de l'élément d'assemblage sur un côté supérieur du premier composant au moyen du dispositif de serrage, à une pression définie.

17. Agencement selon l'une quelconque des revendications 13 à 16, dans lequel au moyens d'une pièce complémentaire agencée dans la zone d'un côté inférieur du premier composant, une déformation du premier composant due à la pression est en grande partie évitée.

18. Agencement selon l'une quelconque des revendications 13 à 17, dans lequel le dispositif de serrage a une tige pilote pour guider et centrer les moyens d'assemblage pendant l'opération de soudage dans l'alésage dans le premier composant.

19. Agencement selon l'une quelconque des revendications 13 à 18, dans lequel la tige pilote est de plus réalisée sous la forme d'un montage d'alésage destiné à incorporer l'alésage dans le premier composant pendant l'opération de soudage.

20. Agencement selon l'une quelconque des revendications 13 à 19, comportant en outre : un dispositif de commande et de régulation, qui est configuré pour commander la fréquence et/ou l'amplitude du mouvement oscillant de manière linéaire et/ou rotative imprimé au dispositif de serrage par l'unité d'entraînement.

21. Agencement selon l'une quelconque des revendications 13 à 20, dans lequel le dispositif de commande et de régulation a au moins un émetteur de signaux pour afficher un achèvement correct de l'opération de soudage.
